# EUROPEAN PATENT APPLICATION

(11) **EP 4 641 325 A1**
(43) Date of publication of application: **29.10.2025**
(21) Application number: 23906600.4
(22) Date of filing: 27.11.2023
(51) Int. Cl.: G05B 19/05

(54) **PROGRAM CREATION ASSISTANCE DEVICE, CONTROL METHOD FOR PROGRAM CREATION ASSISTANCE DEVICE, AND CONTROL PROGRAM FOR PROGRAM CREATION ASSISTANCE DEVICE**

(30) Priority: 22.12.2022 JP 2022205928
(71) Applicant: OMRON Corporation, Kyoto 600-8530 (JP)
(72) Inventor: NAGAO, Kenjiro, Kyoto-shi, Kyoto 600-8530 (JP)
(74) Representative: Becker, Eberhard
(86) International application number: PCT/JP2023/042294
(87) International publication number: WO 2024/135231

(57) **Abstract**

The present invention realizes more efficient problem investigation of a ladder program. A program creation assistance device (1) comprises a display processing section (12) that reads a ladder program (51) from a storage part (50) and that generates an image being displayable on a display device (3) and including a ladder diagram corresponding to a required circuit. The display processing section (12) receives a comment, of an operator, relating to the circuit included in the image, generates a new image obtained by adding the comment to the image, and causes the display device (3) to display the new image.

## Description

### Technical Field

The present disclosure relates to a program creation assistance device or the like that assists in the creation of a ladder program.

### Related Art

A method of sequence control of an input or output device by a programmable logic controller (PLC) may be defined, as an example, by a ladder diagram described in ladder language. The ladder diagram has a configuration in which a logic circuit expressed by contacts and coils is drawn in a ladder shape to connect two bus bars (left bus bar and right bus bar) that represent power and are drawn with a space therebetween.

Conventionally, the ladder diagram has been used in order to show a physical relay circuit as a logic circuit. On the other hand, in recent years, a program creation assistance device has been developed that saves and edits the sequence control defined by the ladder diagram as program data (hereinafter referred to as a ladder program). The program creation assistance device causes a display device or the like to display a ladder diagram corresponding to the ladder program.

For example, Patent Document 1 below discloses a technology for searching a ladder diagram for a circuit block including an output device that opens and closes an input device corresponding to a contact included in a search target block designated by an operator. In the technology disclosed in Patent Document 1, by repeating the search and identifying and displaying a hierarchical relationship between each block, the viewability of the ladder diagram can be improved. A program element of the ladder program and its conduction state during execution of sequence control can be displayed on a display part.

### Prior-Art Documents

### Patent Documents

Patent Document 1: Japanese Patent Laid-open No. 2016-004414 (published on January 12, 2016)

### SUMMARY OF THE INVENTION

### Problems to Be Solved by the Invention

In the case where there is a problem with a portion of a ladder program or a portion of a device operating in accordance with a ladder program, in order to identify the cause of the problem, it is necessary for an operator (investigator) of a program creation assistance device to trace back and investigate related program elements. However, since a dependency relationship between the program elements in the ladder program branches in a complex manner, identifying the cause is not easy, and a program creation assistance device is desired which enables relatively efficient problem investigation (debugging).

One embodiment of the present disclosure aims to realize a program creation assistance device that is able to realize relatively efficient problem investigation (debugging) of a ladder program. Means for Solving the Problems

That is, a program creation assistance device according to one aspect of the present disclosure includes: a storage part, storing the ladder program; and a display processing part, reading the ladder program from the storage part and generating an image displayable on a display device, the image including a ladder diagram corresponding to a circuit required. The display processing part receives a comment of an operator regarding the circuit included in the image caused to be displayed on the display device by the display processing part, generates a new image in which the comment has been added to the image, and causes the display device to display the new image.

A control method for a program creation assistance device according to one aspect of the present disclosure includes: a display processing step, in which the ladder program is read from a storage part storing the ladder program, and an image is generated that is displayable on a display device and that includes a ladder diagram corresponding to a circuit required. The display processing step may include: a comment reception step, in which a comment of an operator regarding the circuit included in the image displayed on the display device is received; and a display step, in which a new image in which the comment has been added to the image is generated, and the new image is displayed on the display device.

A control program for a program creation assistance device according to one aspect of the present disclosure includes: a display processing step, in which the ladder program is read from a storage part storing the ladder program, and an image is generated that is displayable on a display device and that includes a ladder diagram corresponding to a circuit required. The display processing step may include: a comment reception step, in which a comment of an operator regarding the circuit included in the image displayed on the display device is received; and a display step, in which a new image in which the comment has been added to the image is generated, and the new image is displayed on the display device.

The program creation assistance device according to each embodiment of the present disclosure may be realized by a computer. In this case, a control program for a program creation assistance device that realizes the program creation assistance device on the computer by operating the computer as each part (software element) provided in the program creation assistance device, and a computer-readable recording medium storing the control program also fall in the scope of the present disclosure.

### Effects of the Invention

According to one embodiment of the present disclosure, smooth problem investigation of a ladder program can be realized.

### BRIEF DESCRIPTION OF THE DRAWINGS

[FIG. 1] is a block diagram showing a main configuration of a device included in a program creation assistance device 1 according to Embodiment 1 of the present disclosure.
[FIG. 2] is a flowchart showing an example of an overall processing flow of the program creation assistance device 1 according to Embodiment 1 of the present disclosure.
[FIG. 3] is an example of a ladder diagram according to Embodiment 1 of the present disclosure.
[FIG. 4] is a screen view showing an example of a debugging display according to Embodiment 1 of the present disclosure.
[FIG. 5] is a flowchart showing an example of a processing flow according to Embodiment 2 of the present disclosure.
[FIG. 6] is a screen view showing an example of a screen before expansion and display of a ladder diagram according to Embodiment 2 of the present disclosure.
[FIG. 7] is a screen view in a case where a display change operation according to Embodiment 2 of the present disclosure is performed.
[FIG. 8] is a screen view showing an example of a screen after expansion and display of a ladder diagram according to Embodiment 2 of the present disclosure.
[FIG. 9] is a screen view showing an example of a screen before deletion and display of a ladder diagram according to Embodiment 2 of the present disclosure.
[FIG. 10] is a screen view in a case where a display change operation according to Embodiment 2 of the present disclosure is performed.
[FIG. 11] is a screen view showing an example of a screen after deletion and display of a ladder diagram according to Embodiment 2 of the present disclosure.
[FIG. 12] is a screen view showing an example of a screen before hiding processing of a ladder diagram according to Embodiment 2 of the present disclosure.
[FIG. 13] is a screen view in a case where a display change operation according to Embodiment 2 of the present disclosure is performed.
[FIG. 14] is a screen view showing an example of a screen after hiding processing of a ladder diagram according to Embodiment 2 of the present disclosure.

### DESCRIPTION OF THE EMBODIMENTS

An embodiment (hereinafter also written as "the present embodiment") according to one aspect of the present disclosure is hereinafter described based on the drawings.

### §1 Application Example

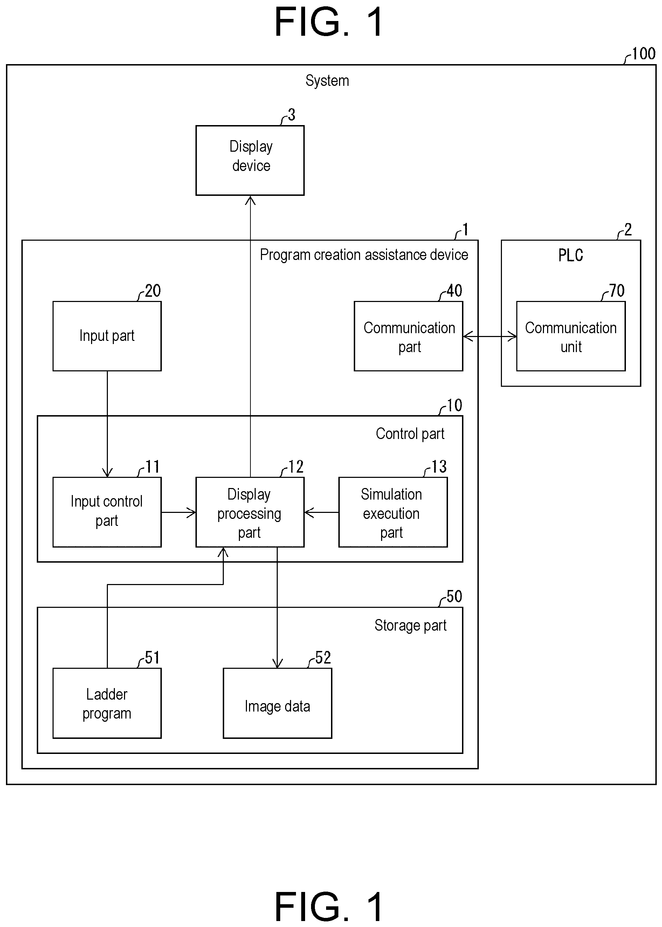

FIG. 1 is a block diagram showing a main configuration of a device included in a program creation assistance device 1 according to the present embodiment. A management system 100 includes: a device (not shown); a programmable logic controller (PLC) 2, centrally managing the device; and the program creation assistance device 1, monitoring a connection relationship and operating state of the device.

The program creation assistance device 1 includes: a storage part 50, storing a ladder program 51; and a display processing part 12, reading the ladder program 51 from the storage part 50 and generating an image displayable on a display device 3, the image including a ladder diagram corresponding to a circuit required.

In the case where an operator inputs a comment to the program creation assistance device 1 regarding a circuit included in the image caused to be displayed on the display device 3, the display processing part 12 receives the comment, generates a new image in which the comment has been added to the image, and causes the display device to display the new image. According to the present embodiment, the investigator may record investigation content for each circuit, making it easy to record and confirm an investigation progress as well as to share an investigation result.

### §2 Configuration Example

### [Embodiment 1]

Hereinafter, the first embodiment of the present disclosure will be described in detail using FIG. 1 to FIG. 4. The present disclosure relates to the program creation assistance device 1. The program creation assistance device 1 relates to, as an example, a factory automation (FA) system that centrally manages production facilities installed in a factory or the like. The present disclosure relates to a management system that illustrates, to the operator, a connection relationship of an input device or output device (both simply referred to as "device" hereinafter) included in various production facilities, and a conduction state of each device and components included in the device in the case where the FA system is operated. The input device is, for example, a sensor and a limit switch. The output device is, for example, a lamp or an actuator.

### <<Main Configuration>>

FIG. 1 is a block diagram showing the main configuration of the management system 100, which is an example of a scene where the program creation assistance device 1 according to the present embodiment is applied. The management system 100 includes: a device (not shown); the programmable logic controller (PLC) 2, centrally managing the device; and the program creation assistance device 1, monitoring a connection relationship and operating state of the device. The number of the device connected to the PLC 2 is not particularly limited. The PLC 2 and the device may be indirectly connected via a communication coupler or slave device.

A system to which the program creation assistance device 1 according to the present embodiment can be applied is not limited to a system including the PLC 2. The program creation assistance device 1 according to the present embodiment can be suitably applied to any device or system in which a ladder program is used. For example, the program creation assistance device 1 according to the present embodiment can also be suitably used for assisting in the creation of a ladder program used in a time series data recording and playback device or the like utilized in an FA network.

The PLC 2 is a device that performs sequence control of the device. The PLC 2 includes a communication unit 70 for communicating with the program creation assistance device 1. The PLC 2 operates in either of a program mode and an operation mode. The program mode is a mode in which the PLC 2 does not control the device. The PLC 2 operates in the program mode in the case of, for example, transmitting and receiving data to and from the program creation assistance device 1. On the other hand, the operation mode is a mode in which the device is controlled. In the operation mode, the PLC 2 executes a ladder program for controlling the device. The ladder program is created by the program creation assistance device 1 and downloaded to the PLC 2. On the other hand, in the operation mode, the PLC 2 performs sequence control of the device.

### (Main Configuration of Program Creation Assistance Device 1)

The program creation assistance device 1 is a program creation device that creates the ladder program 51 describing a control method of the PLC 2 according to an input operation of the operator. The program creation assistance device 1 is also a program creation assistance device that assists in the creation of the ladder program 51. In the program creation assistance device 1, it is also possible to identify whether a program element during execution of the ladder program 51 is in a conduction state or a non-conduction state by virtually executing the created (or in-progress) ladder program 51 within the program creation assistance device 1. An instance of a function block that collectively performs predetermined processing may also serve as a program element in a ladder program. The program creation assistance device 1 may be, for example, a personal computer.

Program elements may be roughly classified into contacts indicating inputs and coils indicating outputs, and the output of one coil may be used as the input of another contact. The coils may include, for example, an output device such as a lamp or an actuator. A variable indicating either of two values such as 0 and 1, true and false, or ON and OFF is assigned to the program element. The conduction state means a state in which the value of the variable assigned to the program element is 1, true, or ON, while the non-conduction state means a state in which the value of the variable is 0, false, or OFF.

The program creation assistance device 1 includes a control part 10, an input part 20, a communication part 40, and a storage part 50. The input part 20 receives an input operation of the operator. For example, the input part 20 is an input device such as a mouse or keyboard built in or connected to the program creation assistance device 1. The input part 20 transmits an input signal indicating the received input operation to an input control part 11 (described later) of the control part 10.

The control part 10 is a central processing unit (CPU) that comprehensively controls the program creation assistance device 1. The control part 10 reads a control program for the program creation assistance device 1 stored in the storage part 50, and executes the control program in a random access memory (RAM) (not shown) or the like, thereby realizing a functional block of the input control part 11 and the display processing part 12 described below.

The input control part 11 receives the input signal from the input part 20 and detects, from the signal, an instruction given by the operator to the program creation assistance device 1. In the case where the input control part 11 detects an instruction related to display (display of ladder diagram) of the ladder program 51, the input control part 11 transmits information indicating the content of the instruction to the display processing part 12.

The display processing part 12 causes the display device 3 to display a ladder diagram corresponding to the ladder program 51 and the conduction state of each program element. According to the content of the instruction from the input control part 11, the display processing part 12 reads the ladder program 51 from the storage part 50, and causes the display device 3 to display the ladder diagram corresponding to the ladder program 51.

The simulation execution part 13 confirms a logical format of the ladder program 51. In a program step required during execution of the ladder program 51, the simulation execution part 13 causes the display device 3 to display, along with the ladder diagram, whether each program element is in the conduction state or non-conduction state, in an identifiable manner. A method for displaying the conduction state is not particularly limited. For example, the simulation execution part 13 may display a program element in the conduction state and a connection line connecting the program element in the conduction state in an emphasized manner such as in bold lines or with markings, thereby indicating to the operator whether each program element and connection line is in the conduction state or non-conduction state. Accordingly, the simulation execution part 13 makes it easy for the operator to confirm whether a relay that should be in the conduction state has become in the non-conduction state or whether a relay that should be in the non-conduction state has become in the conduction state.

The communication part 40 is a communication device for the program creation assistance device 1 to communicate with the PLC 2. The storage part 50 stores the ladder program 51 and image data 52 along with various data (such as the control program for the program creation assistance device 1 itself) for the program creation assistance device 1 to operate.

The ladder program 51 is read by the control part 10 according to a predetermined instruction from the operator and is transmitted to the PLC 2 via the communication part 40. The image data 52 is generated by the display processing part 12, and is read by the control part 10 according to a predetermined instruction from the operator. The ladder program 51 generally includes multiple circuits. A circuit indicates a collection of paths along which it is possible to depart from a certain coil connected to the right bus bar and arrive at the left bus bar in the ladder diagram. The circuit may include, for example, one connection line, at least one contact and at least one coil. However, the present disclosure is not limited thereto. One circuit is displayed in one line in the ladder diagram.

The display device 3 is a display device built in or connected to the program creation assistance device 1. The display device 3 displays the ladder diagram corresponding to the ladder program 51 in accordance with control of the display processing part 12.

### (Processing Flow)

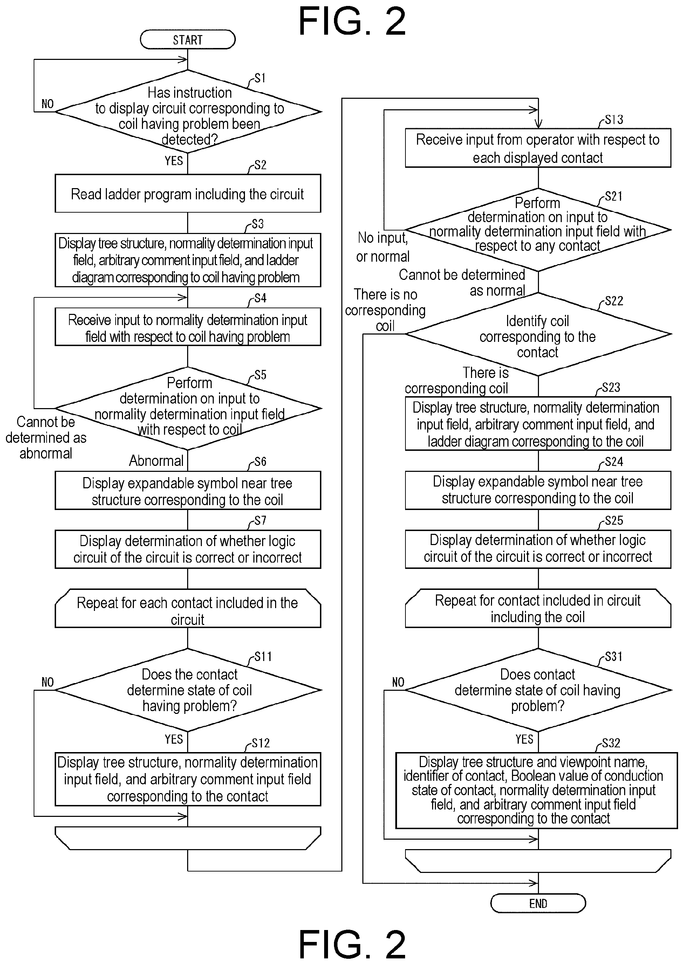

FIG. 2 is a flowchart showing an example of an overall processing flow of the program creation assistance device according to the above embodiment.

In step S1, the input control part 11 determines whether there has been detected an instruction from an operator to display a circuit corresponding to a coil having a problem. If the instruction from the operator has been detected through the input part 20, the input control part 11 passes the instruction to the display processing part 12, and the display processing part 12 executes step S2.

In step S2, the display processing part 12 reads a ladder program including the circuit from the storage part 50.

In step S3, the display processing part 12 reads from the ladder program a tree structure graph, a normality determination input field, an arbitrary comment input field, and a ladder diagram corresponding to the coil having a problem, and displays them on the display device 3. These items are desirably displayed in a table format as in each screen view described later. However, the present disclosure is not limited thereto. The tree structure graph shows a dependency state of contacts and coils in the ladder program in a hierarchical relationship. In the present embodiment, a coil corresponding to a contact and a circuit to which the coil belongs are displayed in a lower position. However, the present disclosure is not limited thereto. The coil and the circuit may be displayed in a higher position.

The normality determination input field is one form of a coil state comment with respect to the coil, and receives an input from the operator with respect to whether the coil is normal or abnormal. In the present embodiment, the normality determination input field is in an item selection format. The determination that the coil is normal corresponds to "No Problem," the determination that the coil is abnormal corresponds to "Problem," the determination that the coil is neither normal nor abnormal corresponds to "Not Sure," and an undetermined state correspond to an empty string item. However, the number of items and item names are not limited to the above. Since it is obvious that the coil having a problem is abnormal, the display processing part 12 desirably displays "Problem" in the normality determination input field from the beginning. However, the present disclosure is not limited thereto. The arbitrary comment input field receives a comment of the operator, for example, in an arbitrary string format.

In step S4, the display processing part 12 receives an input from the operator to the normality determination input field with respect to the coil having a problem. In the present embodiment, if it is determined that the coil is normal, the operator inputs the item as "No Problem;" if it is determined that the coil is abnormal, the operator inputs the item as "Problem;" if it cannot be determined whether the coil is normal or abnormal, the operator inputs the item as "Not Sure."

In step S5, the display processing part 12 performs determination on the input to the normality determination input field with respect to the coil having a problem. If there is an input to the normality determination input field indicating that the coil is abnormal, the display processing part executes step S6 and subsequent steps. If there is no input to the normality determination input field indicating that the coil is abnormal, the display processing part continues the state of receiving input of step S4.

In step S6, the display processing part 12 displays an expandable symbol near the tree structure graph corresponding to the coil. The expandable symbol receives an operation of the operator and switches between a displayed state and a hidden state of an image to be displayed in step S7 onward.

In step S7, the display processing part 12 displays a determination of whether a logic circuit of the circuit is correct or incorrect. The display processing part 12 may display the normality determination input field with respect to the determination of whether the logic circuit of the circuit is correct or incorrect, or may receive a determination of the operator with respect to whether the logic circuit of the circuit is correct or incorrect, as in step S4. That is, if the logic circuit of the circuit is correct, the operator may input the item as "No Problem;" if it is determined that the logic circuit of the circuit is incorrect, the operator may input the item as "Problem;" if it cannot be determined whether the logic circuit of the circuit is correct or incorrect, the operator may input the item as "Not Sure." Alternatively, the control part 10 may perform determination on whether the logic circuit of the circuit is correct or incorrect.

Subsequently, the display processing part 12 repeats step S11 to step S12 for each contact included in the circuit.

In step S11, the display processing part 12 determines whether the contact determines a state of the coil having a problem. If the contact does not determine the state of the coil having a problem (NO in S11), since the contact has no connection with the problem, the display processing part 12 does not display the contact. If the contact determines the state of the coil having a problem (YES in S11), since there is a possibility that the contact may have a connection with the problem, the display processing part 12 executes step S12.

In step S12, the display processing part 12 displays a tree structure graph, an identifier of a contact, a Boolean value of the conduction state of a contact, a normality determination input field, and an arbitrary comment input field corresponding to the contact. Since each item is an application of the content of step S3 to a contact, repeated descriptions are omitted. Since it is not obvious whether a contact is abnormal, the initial display of the normality determination input field may be blank or "Not Sure." The display may be combined with, for example, a table image displayed in step S3.

In step S13, the display processing part 12 receives an input from the operator with respect to each displayed contact. The input from the operator may be, for example, selecting any item in the normality determination input field with respect to any contact in an image displayed on the display device 3, or right-clicking on a symbol of the contact with the mouse. When the input part 20 receives the operation, the input part 20 passes information thereof to the display processing part 12.

In step S21, the display processing part 12 performs determination on the input to the normality determination input field with respect to any contact. If the input to the normality determination input field with respect to any contact cannot be determined to be normal, that is, if the input is "Not Sure" or "Problem" in the example of the present embodiment, the display processing part 12 executes step S22. Otherwise (if "no input, or normal" in step S21), the display processing part 12 returns to the state of receiving input of step S13.

In step S22, the display processing part 12 identifies a coil corresponding to the contact. The coil corresponding to the contact means that the output of the coil is used as the input of the contact. For example, the coil is a coil assigned the same identifier as the contact. Hereinafter, this coil is referred to as the coil. If a corresponding coil exists, the display processing part 12 executes step S23. If no corresponding coil exists, the display processing part 12 interrupts the processing.

In step S23, the display processing part 12 displays a tree structure graph, a normality determination input field, an arbitrary comment input field, and a ladder diagram corresponding to a circuit to which the coil belongs corresponding to the coil. Since each item is an application of the content of step S3 to a contact, repeated descriptions are omitted. Since it is not obvious whether the coil is abnormal, the initial display of the normality determination input field may be blank or "Not Sure." The display may be combined with, for example, a table image displayed in step S3.

In step S24, the display processing part 12 displays an expandable symbol near the tree structure graph corresponding to the coil. The expandable symbol is similar to that of step S6.

In step S25, the display processing part 12 displays a determination of whether a logic circuit of a circuit corresponding to the coil is correct or incorrect. This determination is similar to the determination of step S7.

Subsequently, the display processing part 12 repeats step S31 to step S32 for each contact included in a circuit including the coil.

In step S31, the display processing part 12 determines whether the contact determines a state of the coil having a problem. The determination is similar to that of step S11.

In step S32, the display processing part 12 displays a tree structure graph, a normality determination input field, and an arbitrary comment input field corresponding to the contact. The display is similar to that of step S12.

The display processing part 12 is able to recursively execute step S13 to step S32 with respect to each program element displayed on the display device 3. Although not shown, the input part 20 may, according to an operation of the operator, save in the storage part 50 the image data 52 being data of the entire displayed image. The image data 52 may be the image itself or may be a set of various data necessary for displaying the image.

### (Example of Ladder Diagram)

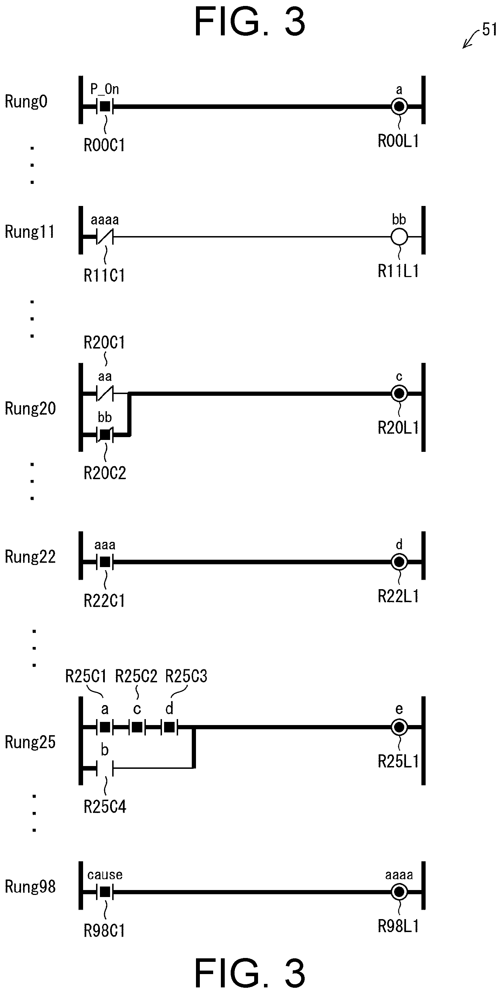

FIG. 3 is an example of a ladder diagram displayed in the case where the display processing part 12 displays the entire ladder diagram corresponding to the ladder program 51 on the display device 3. In FIG. 3, the circuits that are unnecessary for describing the present embodiment are omitted from description. In FIG. 3, the circuits of line 0, line 11, line 20, line 22, line 25, and line 98 in the ladder program 51 are displayed. The string "Rung" representing "circuit" and strings indicating the numbers of lines of the circuits are respectively displayed on the left side of the left bus bar. A line number in the ladder program corresponds to an execution priority order in the ladder program. In the ladder program 51 shown in FIG. 3, the circuit of line 0 is executed with the highest priority, and the circuit of line 98 is executed with the lowest priority.

Here, the ladder program is preferentially executed from a circuit with a small number of lines. In the case where the same identifier is assigned to a certain coil and a certain contact, the output of the coil is used as the input of the contact. A method for determining the output and input of a contact may be implemented by any other method. The output of a coil may be a Boolean value, or may be a numeric or other variable type. The Boolean value may be inverted, or may undergo any other operation or processing.

In the circuit of line 0, contact R00C1 and coil R00L1 are arranged (described) as program elements. In the circuit of line 11, contact R11C1 and coil R11L1 are arranged (described) as program elements. In the circuit of line 20, contact R20C1, contact R20C2 and coil R20L1 are arranged (described) as program elements. In the circuit of line 22, contact R22C1 and coil R22L1 are arranged (described) as program elements. In the circuit of line 25, contact R25C1, contact R25C2, contact R25C3 and contact R25C4 as well as coil R25L1 are arranged (described) as program elements. In the circuit of line 98, contact R98C1 and coil R98L1 are arranged (described) as program elements. It is desired that the symbols of each program element are symbols in accordance with IEC or JIS standards as in the example of FIG. 3 so that they can be understood by many operators. However, the present disclosure is not limited thereto.

The conduction state and non-conduction state of each program element may be displayed in an identifiable manner on the display device 3. With respect to the connection line, the connection lines are constantly in the conduction state from the left bus bar to the program element nearest the left bus bar. In the case where the nearest program element is in the conduction state, the connection lines from the program element to the next program element are in the conduction state. On the other hand, in the case where the nearest program element is in the non-conduction state, the connection lines from the program element to the next program element are in the non-conduction state. In the example of FIG. 3, a program element in the conduction state is displayed filled in. In the example of FIG. 3, a connection line connecting a program element in the conduction state is displayed by a bold line. The conduction state and non-conduction state will be indicated in the same manner in subsequent figures showing ladder diagrams.

The alphabets and symbols attached to each contact and coil indicate the identifiers assigned to the program elements. A contact to which a certain identifier is attached receives, as an input signal, an execution result of a coil to which the same identifier is attached.

In such a complex ladder program, during debugging, the operator is likely to lose track of an investigation status as they trace back through a program hierarchy (circuit) from a problem occurrence location to a cause. That is, a problem arises that the operator is likely to forget how far they have investigated or forget the investigation result. Accordingly, by generating an image that allows for reception of a comment corresponding to a circuit, the program creation assistance device 1 assists the operator with the investigation and clarifies the investigation status. In the following, as an example, a malfunction (problem) has occurred in which coil R25L1 which should originally be in the non-conduction state is in the conduction state, and the operator operates the program creation assistance device 1 to investigate the cause of the malfunction.

### (Screen Example of Debugging Display)

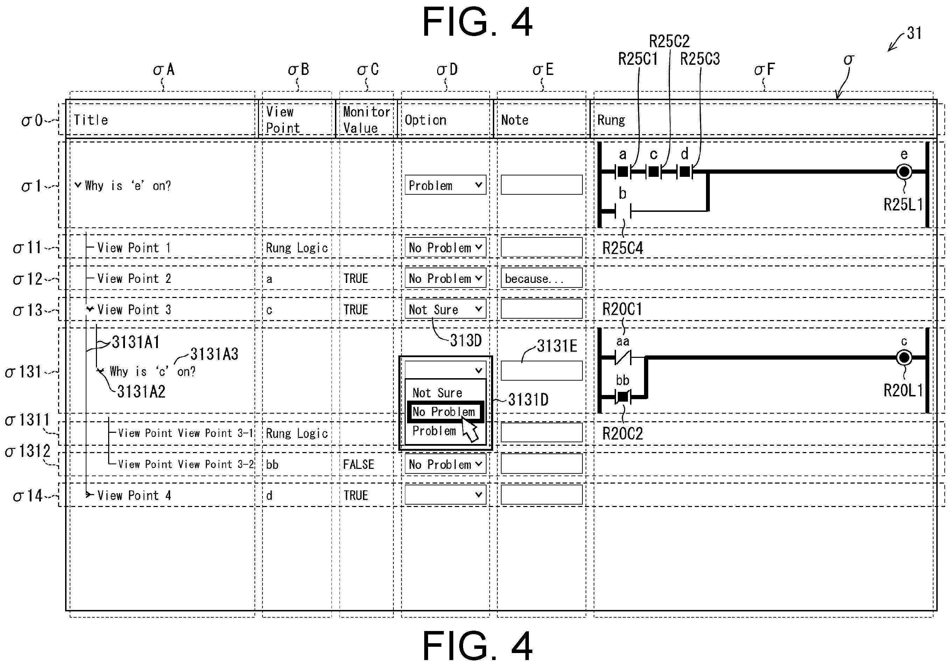

FIG. 4 is a screen view showing an example of a debugging display according to the present embodiment. In accordance with a command from the input control part 11, the display processing part 12 displays information regarding coil R25L1 having a problem on a display 31 of the display device 3. The display processing part 12 displays the information regarding coil R25L1 having a problem as a table in a region σ. However, the display may be in other formats. Row σ0 displays headers of the table. From row σ1 onward, various information for each specific program element is displayed.

Column σA displays the title, expandable symbol, and tree structure graph regarding a program element serving as an investigation target. Column σB displays the identifier of the program element that is the investigation target. In the case where the investigation target is a logic circuit of a circuit, since no identifier exists, column σB may be omitted from being displayed. However, in the example of the present figure, to make it clear that a logic circuit of a circuit is the investigation target, the string "Rung Logic" is displayed instead of the identifier. In the case where the ladder program 51 is designed such that a certain contact and a coil corresponding to the contact have the same identifier, column σB corresponding to either of them may be omitted from being displayed. In the example of the present figure, the identifier corresponding to the coil is omitted from being displayed.

Column σC displays the Boolean value of the conduction state of the program element that is the investigation target. In the case where the ladder program 51 is designed such that the conduction states of a certain contact and a coil corresponding to the contact match, the Boolean value of either of them may be omitted from being displayed. In the example of the present figure, the display is omitted with respect to the coil and the logic circuit of the circuit. Column σD displays the normality determination input field. Column σE displays the arbitrary comment input field. Column σF displays a circuit corresponding to the investigation target. In the example of the present figure, only in the case where the investigation target is a coil, the circuit corresponding to the coil is displayed. However, the present disclosure is not limited thereto. Hereinafter, for example, a region within the region σ corresponding to column σA of row σ1 will be described as "region σ (1, A)."

Row σ1 displays the information regarding coil R25L1 having a problem. Column σ11 displays information regarding a logic circuit of a circuit to which coil R25L1 having a problem belongs.

Column σ12 displays information regarding contact R25C1 that determines a state of coil R25L1 having a problem. Here, the normality determination input field of region σ (12, D) displays, as an example, a comment indicating that the contact is normal as a result of determination of the operator. The arbitrary comment input field of region σ (12, E) displays, as an example, the string "because..." indicating the basis for the determination of the operator.

Row σ13 displays information regarding contact R25C2 that determines the state of coil R25L1 having a problem. Here, a normality determination input field 313D of region σ (13, D) displays, as an example, a comment indicating that the contact cannot be determined to be normal or abnormal as a result of determination of the operator. Accordingly, the display processing part 12 displays further information about contact R25C2 in row σ131, row σ1311, and row σ1312.

The following describes in detail the display processing performed by the display processing part 12 in the case where the operator has performed further investigation since it could not be determined whether coil R20L1 corresponding to contact R25C2 is normal or abnormal, and finally determines that coil R20L1 is normal and inputs a comment. In region σ (131, A), a tree structure graph 3131A1, an expandable symbol 3131A2, and a title 3131A3 are displayed. In this case, the tree structure graph 3131A1 includes a straight line indicating that contact R25C2 and contact R25C3 belong to the same circuit, and a broken line indicating that coil R20L1 corresponds to contact R25C2.

The expandable symbol 3131A2 indicates whether information regarding the program element being the investigation target is expanded and displayed. The input part 20 receives an operation of the operator with respect to a region corresponding to the expandable symbol 3131A2. Since the operator inputs "Not Sure" to the normality determination input field 313D, row σ131 is displayed. Furthermore, row σ1311 and row σ1312 are expanded and displayed directly below row σ131. The expandable symbol 3131A2 is a downward chevron indicating an expanded state. The expanded state may be expressed by other symbols. The title 3131A3 may be, for example, a string briefly indicating a matter to note during investigation.

Row σ1311 displays information regarding the appropriateness of a logic circuit of a circuit to which coil R20L1 belongs. In the case where the logic circuit of the circuit to which coil R20L1 belongs is appropriate, the operator inputs "No Problem" in the normality determination comment of region σ (1311, D). Row σ1312 displays information about contact R20C2 that determines a state of coil R20L1. In the case where contact R20C2 is normal, the operator inputs "No Problem" in the normality determination comment of region σ (1312, D). That is, since there is no problem with all the elements related to the normality of row σ131, the operator determines that there is no problem with row σ131 and, for example, clicks a normality determination input field 3131D displayed in region σ (131, D). According to the operation, the display processing part 12 sets the normality determination input field to an item-selectable state and receives the operation of the operator.

Here, in the case where the operator inputs "No Problem," the display processing part 12 receives the normality determination comment of the operator, generates a new image in which the comment ("No Problem") is reflected in the normality determination input field 3131D, and displays the new image in region σ (131, D). Although not shown, the display processing part 12 may delete row σ1311 and row σ1312, and move up and display row σ14 in the empty region. By controlling the display according to the input normality determination comment in this way, the program creation assistance device 1 makes it possible for the operator to smoothly investigate problems. The operator may input, for example, a basis for determining that there is no problem with row σ131, to the arbitrary comment input field displayed in region σ (131, E).

Column σ14 displays information regarding contact R25C3 that determines the state of coil R25L1 having a problem. Since detailed information related to row σ14 is not expanded and displayed, the expandable symbol displayed in region σ (14, A) is a lateral chevron indicating a non-expanded state. The non-expanded state may be expressed by other symbols.

Since contact R25C4 does not determine the state of coil R25L1 having a problem, the display processing part 12 does not display information regarding contact R25C4. The same applies to contact R20C1 since contact R20C1 does not determine the state of coil R20L1. Accordingly, the operator is able to smoothly proceed with the investigation without having to search for unnecessary information.

Although not shown, the display processing part 12 is able to save a screen of a predetermined situation as the image data 52 in the storage part 50. The saving may be performed at a fixed timing, or at a timing at which an image on the display device 3 is updated, or upon receiving a save operation of the operator. The display processing part 12 is able to, for example, receive the operation of the operator, read the image from the storage part 50, and cause the display device 3 to display the image. Accordingly, the content confirmed by the investigator can be utilized as a report or data. Recently, programs have been increased in scale, and multiple programmers are often involved and share the work of developing programs. Thus, the investigation image based on a ladder diagram in which the notation is determined by international standards has the merit of becoming a problem report that is easy to understood by a relatively wide range of people.

### [Embodiment 2]

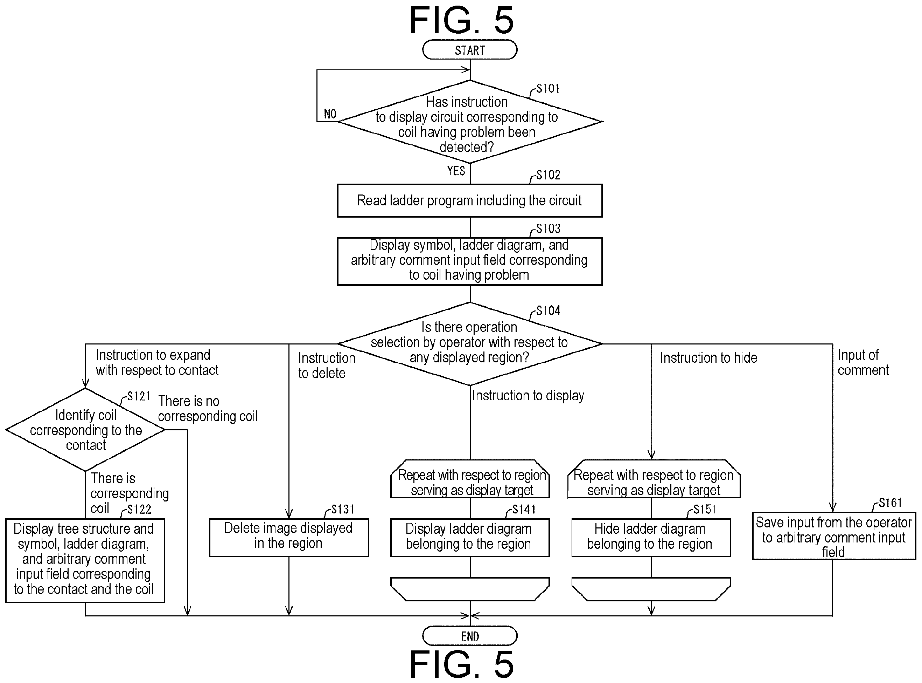

FIG. 5 is a flowchart showing an example of a processing flow according to the present embodiment. Step S101 and step S102 are respectively similar to step S1 and step S2 of FIG. 2.

In step S103, the display processing part 12 displays a symbol, a ladder diagram, and an arbitrary comment input field corresponding to the coil having a problem.

In step S104, the display processing part 12 determines whether there is an operation selection by the operator with respect to any displayed region. The operation selection by the operator refers to, for example, an instruction to select and expand a contact, an instruction to delete an image within the region, an instruction to display a ladder diagram within the region, an instruction to hide a ladder diagram within the region, or an operation of inputting a comment to the arbitrary comment input field. The input part 20 receives these operations and passes operation information to the display processing part 12. If the operation is an instruction to select and expand a contact, the display processing part 12 executes step S121. If the operation is an instruction to delete an image within the region, the display processing part 12 executes step S131. If the operation is an instruction to display a ladder diagram within the region, the display processing part 12 executes step S141. If the operation is an instruction to hide a ladder diagram within the region, the display processing part 12 executes step S151. If the operation is an operation of inputting a comment to the arbitrary comment input field, the display processing part 12 executes step S162.

In step S121, the display processing part 12 identifies a coil corresponding to the contact. The identification is similar to step S22 of FIG. 2. If there is a coil corresponding to the contact, the display processing part 12 executes step S122.

In step S122, the display processing part 12 displays a tree structure graph and a symbol, a ladder diagram, and an arbitrary comment input field corresponding to the contact and the coil.

In step S131, the display processing part 12 deletes an image displayed in a region to which the contact belongs. For the convenience of operator confirmation, the display processing part 12 may, after deleting the image displayed in the region to which the contact belongs, move an image from other regions to the empty region.

If an instruction to display a ladder diagram within the region is received, the display processing part 12 repeats step S141 with respect to a region serving as a display target. The region serving as the display target may be, for example, a region selected by the operator with the mouse, or a region related to all the coils being displayed. In step S141, the display processing part 12 displays a ladder diagram belonging to the region. The ladder diagram belonging to the region refers to a ladder diagram corresponding to a circuit to which a coil related to the region belongs.

If an instruction to hide a ladder diagram within the region is received, the display processing part 12 repeats step S151 with respect to a region serving as a hiding target. The region serving as the hiding target may be, for example, a region selected by the operator with the mouse, or a region related to all the coils being displayed. In step S151, the display processing part 12 hides a ladder diagram belonging to the region.

In step S162, the display processing part 12 saves an input from the operator to the arbitrary comment input field in the storage part 50. The saving may be temporary for generating an image during the investigation, or may be permanent.

The display processing part 12 is able to recursively execute step S104 to step S122 with respect to each contact displayed on the display device 3. Although not shown, the input part 20 may, according to an operation of the operator, save in the storage part 50 the image data 52 being data of the entire displayed image. The image data 52 may be the image itself or may be a set of various data necessary for displaying the image.

### (Screen Example of Expansion and Display)

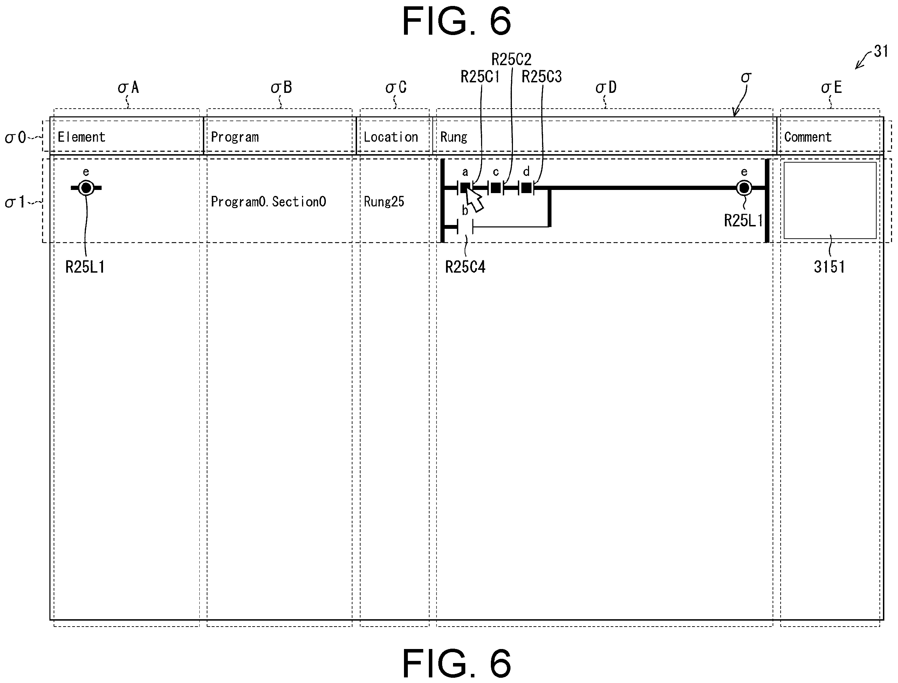

FIG. 6 to FIG. 8 are screen views showing an example of expansion processing of a ladder diagram according to the above embodiment. FIG. 6 is a screen view showing an example of a screen before expansion and display of the ladder diagram according to the above embodiment. In FIG. 6, in accordance with a command from the input control part 11, the display processing part 12 displays the information regarding coil R25L1 on the display 31 of the display device 3. The display processing part 12 displays the information regarding coil R25L1 as a table in the region σ. However, the display may be in other formats. Row σ0 displays headers of the table. From row σ1 onward, various information for each specific program element is displayed.

Column σA displays a symbol of the program element and a tree structure graph showing a hierarchical relationship between a relay where a problem occurs and a relay corresponding to the program element. Column σB displays a program name to which the relay corresponding to the program element belongs. Column σC displays a circuit name to which the program element belongs. Column σD displays a ladder diagram corresponding to a circuit to which the program element belongs. The input part 20 receives an input from the operator for a program element displayed within column σD. Column σE displays an input field that receives character information input from the operator. In the case where character information corresponding to the program element exists in the storage part 50, the display processing part 12 may read and display the character information in the input field.

First, in the case where the input part 20 receives an instruction to display from the operator with respect to coil R25L1, the input control part 11 gives a command to the display processing part 12 to display related information in row σ1. The display processing part 12 displays a symbol of coil R25L1 in region σ (1, A). Since the program element is identical to a program element corresponding to the relay where a problem occurs, no tree structure graph is displayed. The display processing part 12 displays the program name "Program0.Section0" to which a relay corresponding to coil R25L1 belongs in region σ (1, B). The display processing part 12 displays the circuit name "Rung25" to which coil R25L1 belongs in region σ (1, C). The display processing part 12 displays a ladder diagram corresponding to the circuit of line 25 to which coil R25L1 belongs in region σ (1, D). The ladder diagram is displayed in the same manner as a portion corresponding to the circuit (Rung25) of line 25 of FIG. 3.

The display processing part 12 displays, in region σ (1, E) , an arbitrary comment input field 3151 that receives character input from the operator regarding coil R25L1. The display processing part 12 receives an arbitrary comment of the operator, and, in the case where the comment of the operator is input to the arbitrary comment input field 3151, generates a new image reflecting the comment and causes region σ (1, E) to display the new image.

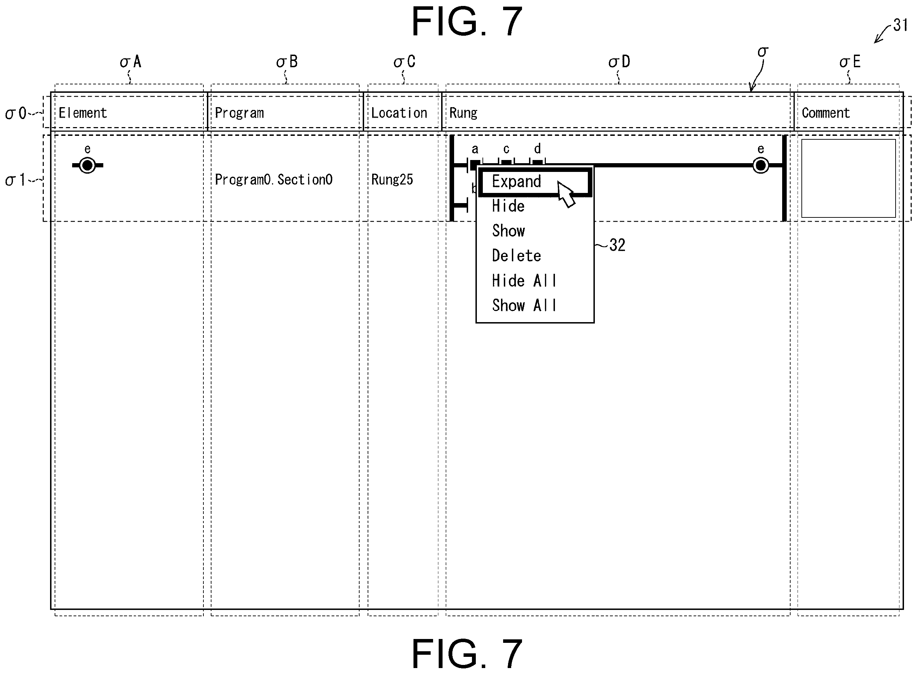

FIG. 7 is a screen in the case where the operator performs a display change operation on contact R25C1 in the ladder diagram displayed in region σ (1, D) of FIG. 6. The display change operation may be, for example, right-clicking of the mouse on a region corresponding to contact R25C1 within region σ (1, D). The display processing part 12 may highlight and display the region so that it can be easily recognized by the operator.

Upon receiving the operation of the operator, the input part 20 displays an operation selection modal 32. The operation selection modal 32 displays "Expand" indicating expanding and displaying a contact, "Hide" indicating hiding a ladder diagram, "Show" indicating displaying a ladder diagram, "Delete" indicating deleting and displaying, "Hide All" indicating hiding all the ladder diagrams on the region σ, and "Show All" indicating displaying all the ladder diagrams on the region σ. The input part 20 receives input from the operator for each of the above. In the case where the contact does not have a corresponding coil, it is also possible for the display processing part 12 to not display an item instructing to expand and display the contact in the operation selection modal 32.

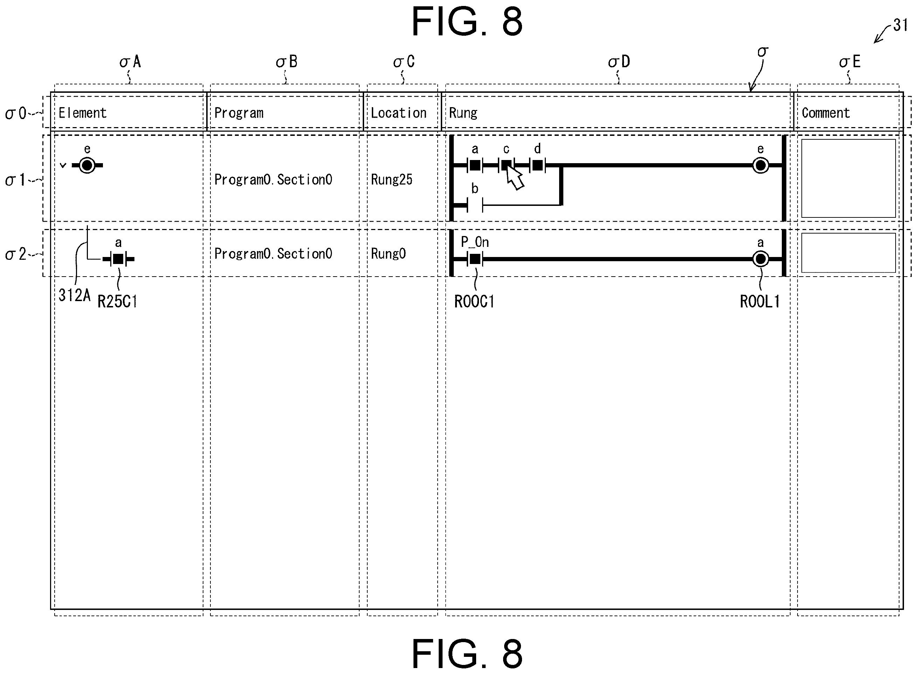

FIG. 8 shows a display in the case where the operator selects "Expand" in FIG. 7. As a result of the display processing part 12 executing step S121 and step S122 of FIG. 5, in addition to the image of FIG. 6, row σ2 displays the information regarding contact R25C1. The display processing part 12 displays a tree structure graph 312A indicating that contact R25C1 determines the state of coil R25L1, and a symbol corresponding to contact R25C1 in region σ (2, A). The display processing part 12 displays the program name "Program0.Section0" to which coil R00L1 corresponding to contact R25C1 belongs in region σ (2, B). The display processing part 12 displays the circuit name "Rung0" to which coil R00L1 corresponding to contact R25C1 belongs in region σ (2, C). The display processing part 12 displays a ladder diagram corresponding to a circuit to which coil R00L1 belongs in region σ (2, D). The display processing part 12 displays an arbitrary comment input field in region σ (2, E).

Although not shown, for example, in the case where the initial contact R00C1 of the circuit of line 0 is a power switch of the PLC2 or the like and does not have a corresponding coil, the display processing part 12 may not display an item instructing to expand and display the contact in the operation selection modal 32. Alternatively, the operation selection modal 32 may display the item; however, when the operator selects "Expand" with respect to contact R00C1, the processing may be interrupted in accordance with the determination of step S121.

### (Screen Example of Deletion and Display)

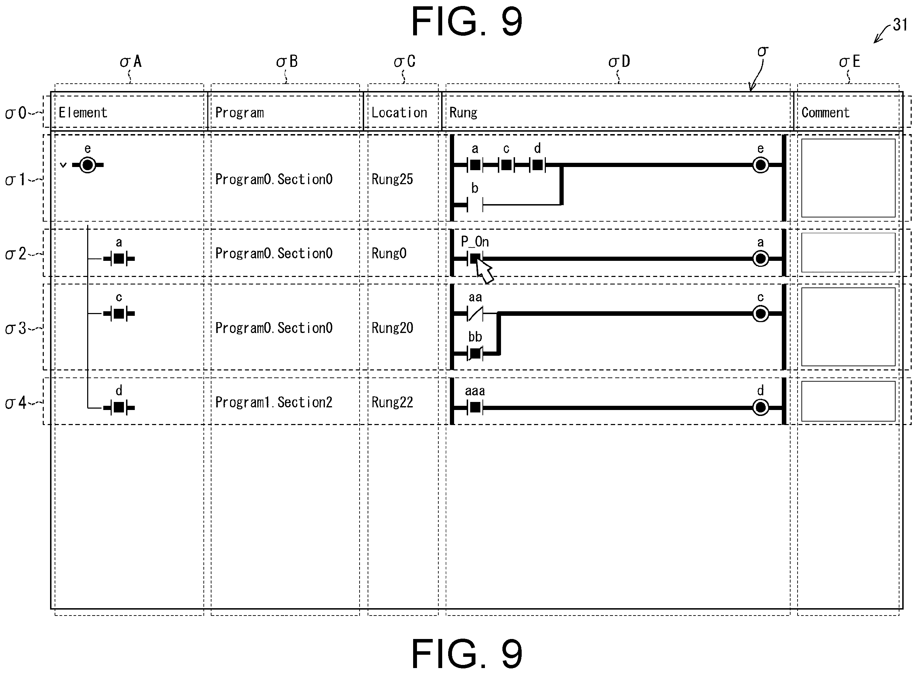

FIG. 9 to FIG. 11 are screen views showing an example of deletion and display of a ladder diagram according to the above embodiment. FIG. 9 is a screen view showing an example of a screen before deletion and display of a ladder diagram in the display device 3 according to the above embodiment. Row σ1 within the region σ displays information about coil R25L1 having a problem, and row σ2 to row σ4 display information corresponding to three contacts that determine the state of coil R25L1 having a problem for each contact. Among them, as in FIG. 8, row σ2 displays information regarding coil R00L1 corresponding to contact R25C1.

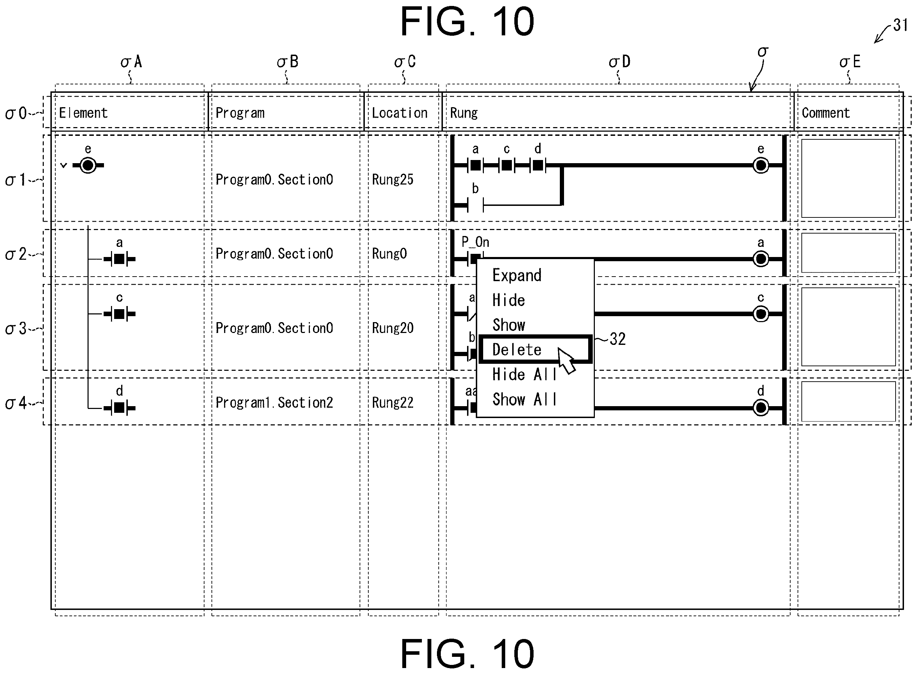

FIG. 10 is a screen in the case where the operator performs a display change operation on region σ (2, D) in FIG. 9. The display change operation may be, for example, right-clicking within the region, or the display processing part 12 may highlight and display the region so that it can be easily recognized by the operator. Upon receiving the operation of the operator, the input part 20 displays the operation selection modal 32.

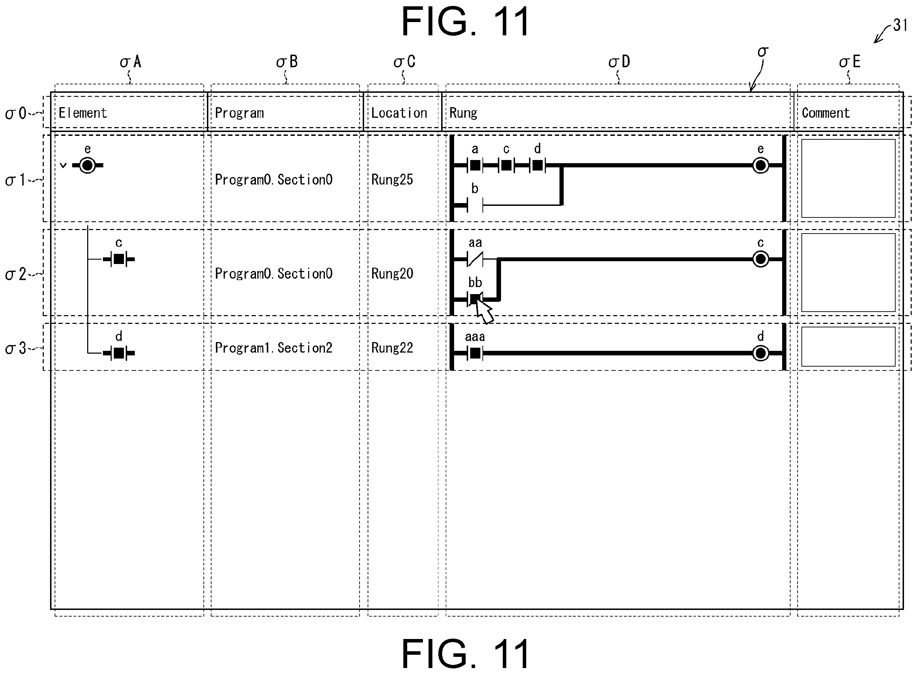

FIG. 11 is a display in the case where the operator selects "Delete" in FIG. 10. The display processing part 12 deletes the information regarding coil R00L1 corresponding to contact R25C1 displayed in row σ2, moves up images that were displayed in row σ3 and row σ4 and displays them in rows σ2 and σ3, respectively.

Although not shown, the display processing part 12 is able to save a screen of a predetermined situation as the image data 52 in the storage part 50. The saving may be performed at a fixed timing, or at a timing at which an image on the display device 3 is updated, or upon receiving a save operation of the operator. The display processing part 12 is able to, for example, receive the operation of the operator, read the image from the storage part 50, and cause the display device 3 to display the image. Accordingly, the content confirmed by the investigator can be utilized as a report or data. Recently, programs have been increased in scale, and multiple programmers are often involved and share the work of developing programs. Thus, the investigation image based on a ladder diagram in which the notation is determined by international standards has the merit of becoming a problem report that is easy to understood by a relatively wide range of people. Furthermore, in the present embodiment, since information about circuits having no connection with the problem can be deleted as in FIG. 11, a report relatively easy to understand can be created.

### (Screen Example of Hiding)

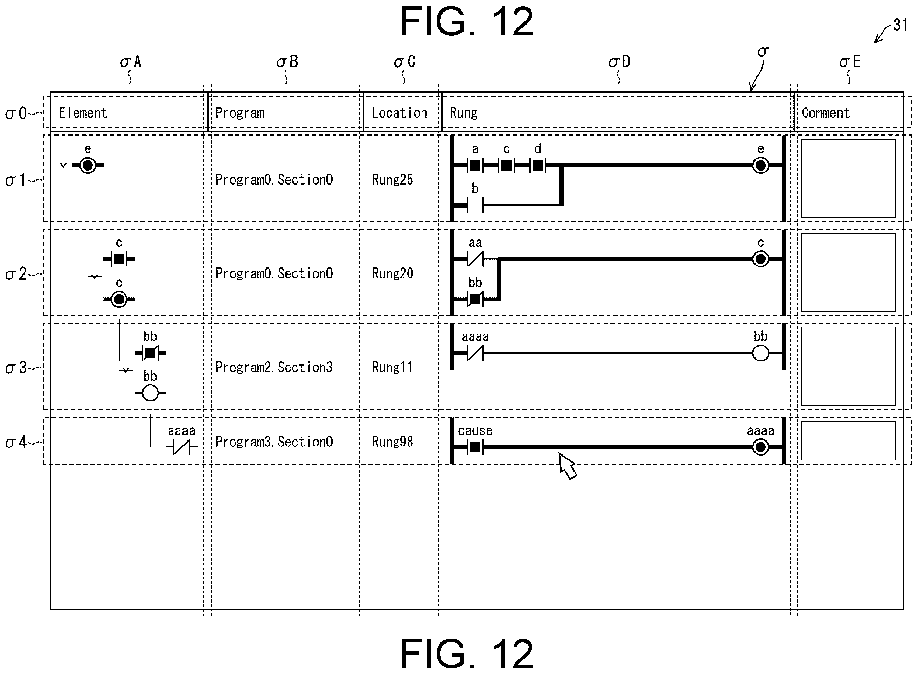

FIG. 12 to FIG. 14 are screen views showing an example of hiding processing of a ladder diagram according to the above embodiment. FIG. 12 is a screen view showing an example of a screen before hiding processing of the ladder diagram according to the above embodiment. On the display device 3, information about circuits to which a coil having a problem and related coils belong are displayed from row σ1 to row σ4.

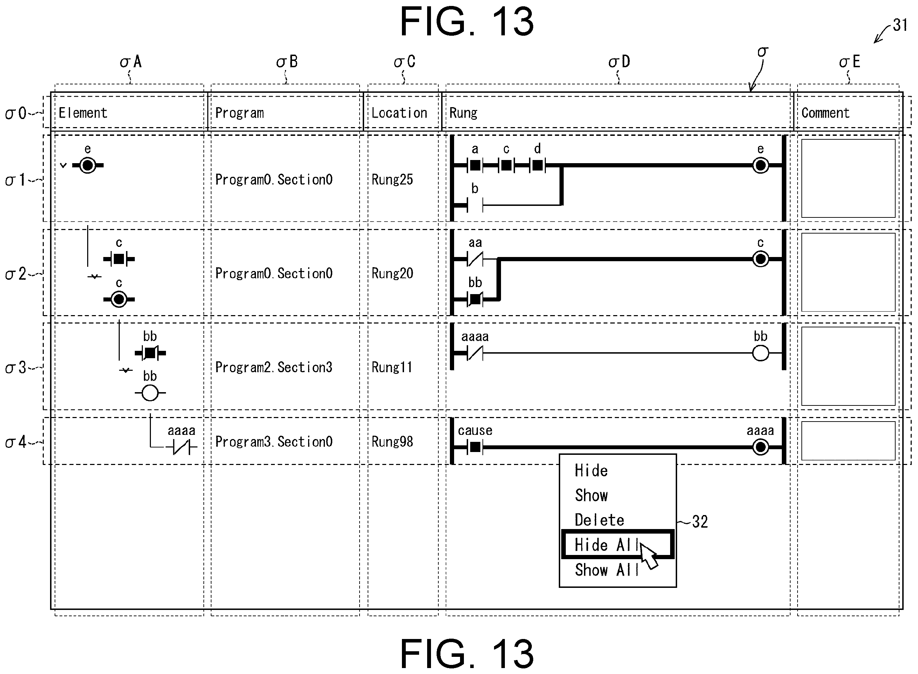

FIG. 13 is a screen in the case where the operator performs a display change operation on region σ (2, D) in FIG. 12. The display change operation may be, for example, the operator right-clicking within the region, or the display processing part 12 may highlight and display the region so that it can be easily recognized by the operator. Alternatively, the display change operation may be the operator right-clicking anywhere within the region σ.

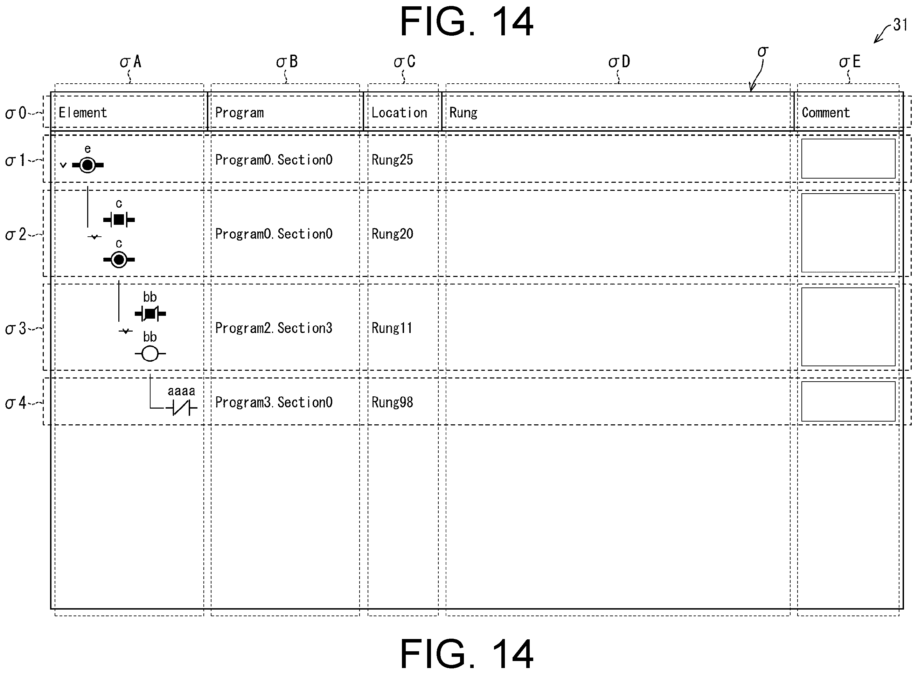

FIG. 14 is a display in the case where the operator selects "Hide All" in FIG. 13. When the input part 20 receives the operation of the operator, the input control part 11 passes the information to the display processing part 12. Since the operation is a command to hide all the ladder diagrams on the region σ, the display processing part 12 executes step S151 of FIG. 5 with respect to row σ1 to row σ4.

### [Modifications]

The above description is based on the premise that the operator is a human. However, the input part 20 may receive determination made by, for example, the control part 10 or an artificial intelligence (not shown), instead of the operator, as various inputs.

### [Implementation Example by Software]

A function of the program creation assistance device 1 (hereinafter referred to as "device") can be implemented by a program that is a program for causing a computer to function as the device and is a program that causes a computer to function as each control block (particularly each part included in the control part 10) of the device.

In this case, the above device includes a computer having, as hardware for executing the above program, at least one control device (for example, a processor) and at least one storage device (for example, a memory). By executing the above program by the control device and the storage device, each function described in each of the above embodiments is implemented.

The above program may be recorded on one or multiple computer-readable recording media which are not transitory. The recording medium may or may not be included in the above device. In the latter case, the above program may be supplied to the above device via any wired or wireless transmission medium.

Some or all of the functions of each of the above control blocks can also be implemented by a logic circuit. For example, an integrated circuit formed by logic circuits that function as each of the above control blocks also falls within the scope of the present disclosure. In addition, it is also possible to implement the functions of each of the above control blocks using, for example, a quantum computer.

Each processing described in each of the above embodiments may be executed by artificial intelligence (AI). In this case, AI may be operated by the control device or may be operated by other devices (such as, for example, an edge computer or cloud server).

The present disclosure is not limited to each embodiment described above, and may be modified in various ways within the scope shown in the claims. An embodiment derived from a proper combination of technical means respectively disclosed in different embodiments is also encompassed in the technical scope of the present disclosure.

That is, a program creation assistance device according to one aspect of the present disclosure includes: a storage part, storing the ladder program; and a display processing part, reading the ladder program from the storage part and generating an image displayable on a display device, the image including a ladder diagram corresponding to a circuit required. The display processing part receives a comment of an operator regarding the circuit included in the image caused to be displayed on the display device by the display processing part, generates a new image in which the comment has been added to the image, and causes the display device to display the new image.

According to the above configuration, the investigator may record investigation content for each circuit, making it easy to record and confirm an investigation progress as well as to share an investigation result.

In the program creation assistance device according to the above one aspect, the following configuration may further be provided. The program creation assistance device further includes: a simulation execution part, simulating a state of a program element including a contact and a coil. The display processing part generates the image to represent whether each contact and coil in the ladder diagram included in the image is in a conduction state or a non-conduction state.

According to the above configuration, the following may be realized. The operator confirms whether the conduction state of the ladder program is normal for each circuit, making it easy to identify a problematic place.

In the program creation assistance device according to the above one aspect, the following configuration may further be provided. It includes a coil state comment regarding a state of the coil of the circuit. The display processing part, upon receiving an input from the operator indicating that the state of the coil is abnormal with respect to the coil state comment, selects from among the contacts in the circuit including the coil a contact that determines the state of the coil, generates a new image in which a contact state comment reception box for receiving a contact state comment from the operator regarding each of the contacts selected has been added, and causes the display device to display the new image.

According to the above configuration, the following may be realized. In order to discover a problem existing in the ladder program, the investigator is able to trace back and confirm a related program element by a simple operation.

In the program creation assistance device according to the above one aspect, the following configuration may further be provided. Upon receipt of an input from the operator indicating that a state of a first contact among the contacts selected cannot be determined to be normal, a new image is generated in which a ladder diagram corresponding to a circuit including a coil corresponding to the first contact has been added, and the display device is caused to display the new image.

According to the above configuration, the following may be realized. In order to discover a problem existing in the ladder program, the investigator is able to trace back and confirm a related program element by a simple operation.

In the program creation assistance device according to the above one aspect, the following configuration may further be provided. The display processing part detects an instruction from the operator to select a first contact to be expanded from among the contacts represented in a ladder diagram of a first circuit included in the image caused to be displayed on the display device by the display processing part, identifies a second circuit in which a coil that determines a state of the first contact is described, generates a new image in which a ladder diagram of the second circuit has been added to the image, and causes the display device to display the new image.

According to the above configuration, the following may be realized. In order to discover a problem existing in the ladder program, the investigator is able to trace back and confirm a related program element by a simple operation.

In the program creation assistance device according to the above one aspect, the following configuration may further be provided. The display processing part detects an instruction from the operator to select a specific ladder diagram to be deleted from among ladder diagrams corresponding to multiple circuits included in the image displayed on the display device, generates a new image in which the specific ladder diagram has been deleted from the image, and causes the display device to display the new image.

According to the above configuration, the following may be realized. In order to discover a problem existing in the ladder program, unnecessary information is easily excluded from the display device, facilitating the investigation.

In the program creation assistance device according to the above one aspect, the following configuration may further be provided. The image is generated to include a tree structure graph indicating a dependency relationship between multiple circuits included in the image and using a symbol of a program element.

According to the above configuration, the following may be realized. The investigator understands the structure of the ladder program, making it easy to identify a problematic place.

In the program creation assistance device according to the above one aspect, the following configuration may further be provided. The image generated by the display processing part is stored as data in the storage part in accordance with an instruction from the operator.

According to the above configuration, the following may be realized. The content confirmed by the investigator can be utilized as a report or data.

A control method for a program creation assistance device according to one aspect of the present disclosure includes: a display processing step, in which the ladder program is read from a storage part storing the ladder program, and an image is generated that is displayable on a display device and that includes a ladder diagram corresponding to a circuit required. The display processing step may include: a comment reception step, in which a comment of an operator regarding the circuit included in the image displayed on the display device is received; and a display step, in which a new image in which the comment has been added to the image is generated, and the new image is displayed on the display device.

According to the above configuration, the investigator may record investigation content for each circuit, making it easy to record and confirm an investigation progress as well as to share an investigation result.

A control program for a program creation assistance device according to one aspect of the present disclosure includes: a display processing step, in which the ladder program is read from a storage part storing the ladder program, and an image is generated that is displayable on a display device and that includes a ladder diagram corresponding to a circuit required. The display processing step may include: a comment reception step, in which a comment of an operator regarding the circuit included in the image displayed on the display device is received; and a display step, in which a new image in which the comment has been added to the image is generated, and the new image is displayed on the display device.

According to the above configuration, the investigator may record investigation content for each circuit, making it easy to record and confirm an investigation progress as well as to share an investigation result.

The program creation assistance device according to each embodiment of the present disclosure may be realized by a computer. In this case, a control program for the program creation assistance device that realizes the program creation assistance device on a computer by causing the computer to operate as each part (software element) included in the program creation assistance device, and a computer-readable recording medium recording the control program, also fall within the scope of the present disclosure.

### Description of Reference Numerals

1 program creation assistance device
2 PLC
3 display device
10 control part
11 input control part
12 display processing part
13 simulation execution part
50 storage part
51 ladder program
R00C1, R11C1, R20C1, R20C2, R22C1, R25C1, R25C2, R25C3, R25C4, R98C1 contact
R00L1, R11L1, R20L1, R22L1, R25L1, R98L1 coil
52 image data
312A, 3131A, 3131A1 tree structure graph
313D, 3131D normality determination input field
3151 arbitrary comment input field
σ region

## Claims

1. A program creation assistance device that assists in creation of a ladder program, comprising:
a storage part, storing the ladder program; and
a display processing part, reading the ladder program from the storage part and generating an image displayable on a display device, the image including a ladder diagram corresponding to a circuit required, wherein
the display processing part
receives a comment of an operator regarding the circuit included in the image caused to be displayed on the display device by the display processing part,
generates a new image in which the comment has been added to the image, and causes the display device to display the new image.

2. The program creation assistance device according to claim **1,** further comprising:
a simulation execution part, simulating a state of a program element including a contact and a coil during execution of the ladder program in a control device that executes the ladder program, wherein
the display processing part generates the image to represent whether each contact and coil in the ladder diagram included in the image is in a conduction state or a non-conduction state.

3. The program creation assistance device according to claim 2, wherein
the comment includes a coil state comment regarding a state of the coil of the circuit; and
the display processing part,
upon receiving an input from the operator indicating that the state of the coil is abnormal with respect to the coil state comment,
selects from among the contacts in the circuit including the coil a contact that determines the state of the coil,
generates a new image in which a contact state comment reception box for receiving a contact state comment from the operator regarding each of the contacts selected has been added, and causes the display device to display the new image.

4. The program creation assistance device according to claim 3, wherein
the display processing part,
upon receiving an input from the operator indicating that a state of a first contact among the contacts selected cannot be determined to be normal,
generates a new image in which a ladder diagram corresponding to a circuit including a coil corresponding to the first contact has been added, and causes the display device to display the new image.

5. The program creation assistance device according to claim 2, wherein
the display processing part
detects an instruction from the operator to select a first contact to be expanded from among the contacts represented in a ladder diagram of a first circuit included in the image caused to be displayed on the display device by the display processing part,
identifies a second circuit in which a coil that determines a state of the first contact is described,
generates a new image in which a ladder diagram of the second circuit has been added to the image, and causes the display device to display the new image.

6. The program creation assistance device according to claim 5, wherein
the display processing part
detects an instruction from the operator to select a specific ladder diagram to be deleted from among ladder diagrams corresponding to a plurality of circuits included in the image caused to be displayed on the display device by the display processing part,
generates a new image in which the specific ladder diagram has been deleted from the image, and causes the display device to display the new image.

7. The program creation assistance device according to claim 5, wherein
the display processing part generates the image so that the image includes a tree structure graph indicating a dependency relationship between a plurality of circuits included in the image and using a symbol of a program element.

8. The program creation assistance device according to any one of claims 1 to 7, wherein
the display processing part stores the image generated by the display processing part as data in the storage part in accordance with an instruction from the operator.

9. A control method for a program creation assistance device that assists in creation of a ladder program, the control method comprising:
a display processing step, in which the ladder program is read from a storage part storing the ladder program, and an image is generated that is displayable on a display device and that includes a ladder diagram corresponding to a circuit required, wherein the display processing step comprises executing:
a comment reception step, in which a comment of an operator regarding the circuit included in the image displayed on the display device is received; and
a display step, in which a new image in which the comment has been added to the image is generated, and the new image is displayed on the display device.

10. A control program for a program creation assistance device that assists in creation of a ladder program, the control program comprising:
a display processing step, in which the ladder program is read from a storage part storing the ladder program, and an image is generated that is displayable on a display device and that includes a ladder diagram corresponding to a circuit required, wherein the display processing step comprises executing:
a comment reception step, in which a comment of an operator regarding the circuit included in the image displayed on the display device is received; and
a display step, in which a new image in which the comment has been added to the image is generated, and the new image is displayed on the display device.
